(19) Europäisches Patentamt
European Patent Office
Office européen des brevets

(11) **EP 3 261 224 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **17175731.3**

(22) Anmeldetag: **13.06.2017**

(51) Internationale Patentklassifikation (IPC):
**H02K 1/27** *(2022.01)* **H02K 1/28** *(2006.01)*
**H02K 15/03** *(2006.01)* **H02K 5/173** *(2006.01)*

(52) Gemeinsame Patentklassifikation (CPC):
**H02K 1/2733; H02K 1/28; H02K 5/1732; H02K 15/03**

(54) **ELEKTRISCHE MASCHINE MIT EINEM ROTOR UND HERSTELLUNGSVERFAHREN FÜR DIE ELEKTRISCHE MASCHINE**

ELECTRIC MACHINE WITH A ROTOR AND METHOD FOR PRODUCING THE ELECTRIC MACHINE

MACHINE ÉLECTRIQUE COMPRENANT UN ROTOR ET PROCÉDÉ DE FABRICATION DE LA MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016 DE 102016211306**

(43) Veröffentlichungstag der Anmeldung:
**27.12.2017 Patentblatt 2017/52**

(73) Patentinhaber: **Robert Bosch GmbH**
**70442 Stuttgart (DE)**

(72) Erfinder:
• **Derhardt, Steffen**
**70839 Gerlingen (DE)**
• **Paweletz, Anton**
**70736 Fellbach (DE)**

(56) Entgegenhaltungen:
**WO-A1-2007/072536    JP-A- 2008 175 337**
**US-A- 5 065 063**

**Beschreibung**

Stand der Technik

Die Erfindung betrifft eine elektrische Maschine.

Stand der Technik

Aus der WO 2007/072536 A1 ist eine elektrische Maschine gemäß dem Oberbegriff des Anspruchs 1 bekannt, die eine zweigeteilte Welle mit einem ersten und zweiten Wellenteil aufweist, zwischen denen ein Rotor mit wenigstens einem Magnetelement angeordnet und mit den beiden Wellenteilen verbunden ist. Es ist ein Axiallager an dem ersten Wellenteil vorgesehen und eine Verbindungsstange, auf welcher die beiden Wellenteile und der Rotor angeordnet sind. Außerdem ist ein erstes und zweites Laufrad vorgesehen. Ein erster Luftspalt ist zwischen dem ersten Laufrad und einem ersten Gehäuse ausgebildet und ein zweiter Luftspalt ist zwischen dem zweiten Laufrad und einem zweiten Gehäuse ausgebildet.

Offenbarung der Erfindung

Die Erfindung offenbart eine elektrische Maschine mit den Merkmalen des Patentanspruchs 1.
Demgemäß ist eine elektrische Maschine vorgesehen aufweisend:

eine zweigeteilte Welle mit einem ersten und zweiten Wellenteil zwischen denen ein Rotor mit wenigstens einem Magnetelement angeordnet und mit den beiden Wellenteilen verbunden ist, wobei ein Axiallager an dem ersten Wellenteil vorgesehen ist, eine Verbindungsstange auf welcher die beiden Wellenteile und der Rotor angeordnet sind, ein erstes und zweites Laufrad, wobei ein erster Luftspalt zwischen dem ersten Laufrad und
einem ersten Gehäuse ausgebildet ist, wobei ein zweiter Luftspalt zwischen dem zweiten Laufrad und einem zweiten Gehäuse ausgebildet ist. Das erste und zweite Laufrad sind an den Enden der Verbindungsstange dem jeweils zugeordneten ersten und zweiten Wellenteil gegenüberliegend angeordnet. Eine thermische Kompensationseinrichtung ist zwischen dem zweiten Wellenteil und seinem zugeordneten Laufrad vorgesehen zur Kompensation einer Ausdehnung der ersten und zweiten Wellenteile und des dazwischen angeordneten Rotors in axialer Richtung. Die Verbindungsstange ist aus einem Material oder einer Materialkombination hergestellt, welche einen möglichst geringen thermischen Ausdehnungskoeffizienten und eine möglichst hohe mechanische Festigkeit aufweist.

Vorteile der Erfindung

Die vorliegende Erfindung schafft eine elektrische Maschine, welche eine thermische Ausdehnung von Bauteilen der Maschine in axialer Richtung erlaubt, so dass ein Spalt zwischen dem jeweiligen Laufrad und seinem Gehäuse bzw. Volute konstant gehalten werden kann.
Bevorzugte Weiterbildungen sind Gegenstand der Unteransprüche.
In einer erfindungsgemäßen Ausführungsform weist die thermische Kompensationseinrichtung ein Federelement und ein Kompensationselement auf. Eine Steifigkeit des Kompensationselements ist derart gewählt, dass eine Ausdehnungs-Differenz zwischen der Verbindungsstange und Elementen des Rotors in axialer Richtung kompensiert werden kann. Das Kompensationselement ist dabei insbesondere elastisch. Das Federelement ist beispielsweise in einer Aussparung an dem äußeren Ende des Wellenteils aufnehmbar, dadurch kann das Federelement zuverlässig positioniert und das Kompensationselement als Ring um das Federelement zwischen dem Wellenteil und seinem Laufrad angeordnet werden.
Die Verbindungsstange kann beispielsweise aus einem kohlefaser- und/oder glasfaserverstärktem Material oder Materialkombination, wie z.B. einem kohlefaser- und/oder glasfaserverstärktem Kunststoff, hergestellt sein. Dies hat den Vorteil, dass die Verbindungsstange nur eine geringfügige Wärmeausdehnung aufweist.
Die Welle weist in einer erfindungsgemäßen Ausführungsform eine Radiallageranordnung mit vorzugsweise wenigstens zwei Radiallager und eine Axiallageranordnung mit wenigstens einem Axiallager auf. Das Axiallager ist dabei an dem Wellenteil ohne thermische Kompensationseinrichtung vorgesehen. Des Weiteren kann als Axiallager ein Gaslager und insbesondere ein dynamisches Gaslager vorgesehen werden. Dies hat den Vorteil, dass der Spalt zwischen dem so gelagerten Wellenteil und seinem Gehäuse bzw. Volute konstant gehalten werden kann.
In einer erfindungsgemäßen Ausführungsform weist der Rotor eine Hülse auf, in welcher das wenigstens ein Magnetelement aufgenommen ist und wobei die Hülse jeweils mit einem inneren Ende des ersten und zweiten Wellenteils verbunden ist. Dazu kann die Hülse auf das jeweilige innere Ende der Wellenteile beispielsweise aufgeschrumpft oder mit diesen verpresst werden.
Gemäß einer anderen erfindungsgemäßen Ausführungsform ist an der Innenumfangsfläche der Hülse und/oder an der Außenumfangsfläche des wenigstens einen Magnetelements eine zumindest teilweise elastische Ausgleichsschicht vorgesehen ist. Die Ausgleichsschicht besteht beispielsweise aus einem Harz, welches nach dem Aushärten zumindest teilweise elastisch ist. Die Ausgleichsschicht hat den Vorteil, dass sie für einen gleichmäßigen Kräfteausgleich bzw. für eine gleichmäßige Verteilung der Vorspannkraft der Hülse auf das wenigstens eine Magnetelement in radialer Richtung sorgt, um die durch das wenigstens eine Magnetelement erzeugte Fliehkräfte beim Drehen der Welle abzufangen.

An den beiden Enden der Magnetelemente ist in einer erfindungsgemäßen Ausführungsform in der Hülse jeweils eine Trägerplatte vorgesehen. Die beiden Trägerplatten bilden dabei eine axiale Aufnahmen für das wenigstens ein Magnetelement. Wenigstens eine Trägerplatte ist dabei aus einem nicht magnetischen Material, z.B. Stahl, oder einer nicht magnetischen Materialkombination hergestellt ist. Dadurch kann an dem Rand des wenigstens einen Magnetelement zusätzlich ein Teil des Streuflusses abfangen werden.

Die beiden Laufräder und die übrigen Elemente des Rotors werden in einer Ausführungsform der Erfindung durch Spannelemente gegeneinander in axialer Richtung verspannt. Als Spannelemente können beispielsweise Spannscheiben vorgesehen werden.

Das Federelement kann in einer Ausführungsform der Erfindung wenigstens eine Federscheibe oder ein Scheibenelement mit einem Innengewinde und/oder Außengewinde sein. Das Federelement kann dabei insbesondere axiale Kräfte aufnehmen.

In der Hülse kann in einer Ausführungsform der Erfindung wenigstens ein hülsenförmiges oder scheibenförmiges Magnetelement aufgenommen werden. Das wenigstens eine hülsenförmige oder scheibenförmige Magnetelement ist dabei beispielsweise radial oder diamaterial magnetisiert ausgebildet. Die Hülse ist dabei zur Aufnahme des Magnetelements an ihrem Innenumfang abgestuft ausgebildet. Des Weiteren kann die Hülse an ihrem Innenumfang eine Nut aufweisen, in welche wenigstens ein Magnetelement in Form eines Magnetstabs eingesetzt ist. Auf diese Weise ist eine segmentierte Bauweise möglich, wobei dabei wenigstens eine oder beide Trägerplatten auch entfallen können an den zugeordneten Enden des wenigstens einen Magnetelements, da die Nut auch als axiale Aufnahme für die Magnetelemente genutzt werden kann.

Kurze Beschreibung der Zeichnungen

Weitere Merkmale und Vorteile der vorliegenden Erfindung werden nachfolgend anhand der Figuren erläutert. Es zeigen:

Fig. 1    eine schematische Schnittansicht einer elektrischen Maschine mit einem Rotor gemäß einer Ausführungsform der Erfindung; und

Fig. 2    ein Flussdiagramm zur Herstellung des Rotors der elektrischen Maschine gemäß Fig. 1.

Ausführungsformen der Erfindung

Die vorliegende Erfindung betrifft die Struktur und die Konstruktion eines Rotors einer elektrischen Maschine, insbesondere Hochgeschwindigkeitsmaschine, die in einem variablen Betriebszyklus betrieben werden kann und hohen Temperaturschwankungen ausgesetzt ist. Die Rotoren solcher elektrischen Maschinen bestehen in der Regel aus hoch energetischen Permanentmagneten aus seltenen Erden.

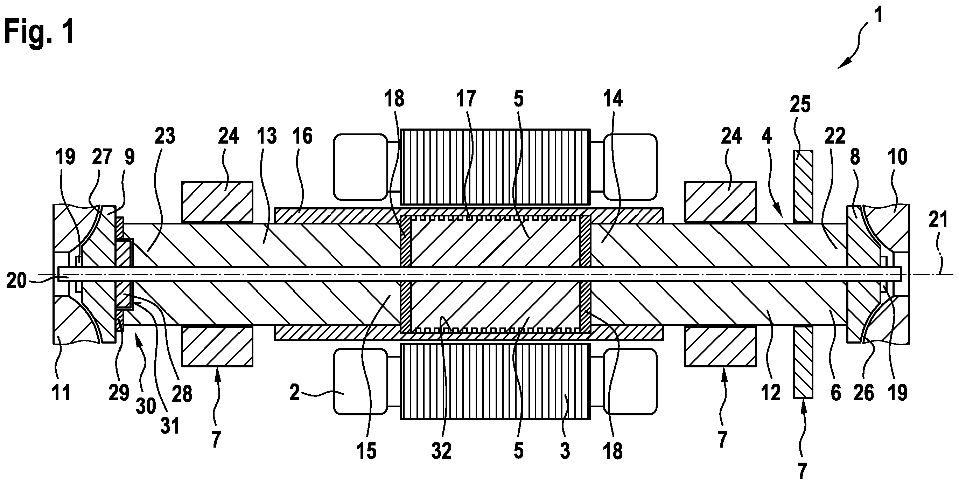

In Fig. 1 ist eine Grundanordnung einer elektrischen Maschine 1, z.B. einer Hochgeschwindigkeitsmaschine, gemäß einer Ausführungsform der Erfindung gezeigt. Für die Funktion, die Stabilität und den Wirkungsgrad der Maschine 1, z.B. einen Verdichter oder Kompressor wie er in Fig. 1 beispielhaft gezeigt ist, ist es wichtig, dass die relative Position zwischen den Laufrädern bzw. Impellern und den Gehäusen bzw. Voluten genau eingestellt ist und möglichst nicht oder so wenig wie möglich beeinflusst wird durch die unterschiedlichen Betriebsbedingungen, insbesondere damit verbundene Temperaturausdehnungen von Komponenten der Maschine 1.

Fig. 1 zeigt die Grundanordnung von elektromagnetischen, aktiven Komponenten der elektrischen Maschine 1, wie dem Stator 2 mit Wicklungen 3, dem Rotor 4 mit Magnetelementen 5, die Welle 6 und die Lagerelemente 7 des Rotors 4. Die Darstellung in Fig. 1 ist dabei rein schematisch, stark vereinfacht und nicht maßstäblich.

Die Maschine 1 bildet in dem in Fig. 1 gezeigten Ausführungsbeispiel den Antrieb eines zweistufigen Kompressors oder Verdichters. Die Laufräder 8 und 9 von beiden Verdichterstufen der elektrischen Maschine 1 sind auf gegenüberliegenden Seiten des Motors angeordnet. Ihre Gegenstücke, die Gehäuse oder Voluten 10, 11 sind in Fig. 1 ebenfalls dargestellt.

Wie in Fig. 1 gezeigt ist, weist die elektrische Maschine 1 eine zweiteilige Welle 6 oder zweiteilige Motorwelle mit einem ersten Wellenteil 12 und einem zweiten Wellenteil 13 auf. Die beiden ersten und zweiten Wellenteile 12 und 13 sind auf einer gemeinsamen Verbindungsstange 20 angeordnet, deren Längsachse gleichzeitig auch die Rotationsachse 21 der Welle 6 und ihrer Wellenteile 12, 13 bildet. An dem jeweiligen äußeren Ende 22, 23 des ersten und zweiten Wellenteils 12 bzw. 13 ist in dem in Fig. 1 gezeigten Ausführungsbeispiel jeweils das Laufrad oder sog. Impeller 8 bzw. 9 angeordnet.

Zur Ausbildung des Rotors der elektrischen Maschine 1 sind zwischen den beiden inneren Enden 14, 15 der Wellenteile 12 und 13 ein oder mehrere Magnetelemente 5 um die Verbindungsstange 20 angeordnet, insbesondere radial angeordnet. Die Magnetelemente 5 sind dabei insbesondere Permanentmagnete, beispielsweise Permanentmagnete aus seltenen Erden.

Des Weiteren ist eine Rotor-Verbindungshülse oder Hülse 16, z.B. eine zylindrische Hülse, vorgesehen, die sich zumindest über einen jeweiligen Abschnitt der inneren Enden 14, 15 des ersten und zweiten Wellenteils 12 und 13 und über die dazwischen angeordneten Magnetelemente 5 erstreckt. Die Hülse 16 dient dabei als radiale Aufnahme für die Magnetelemente 5.

Die Hülse 16 ist hierbei zumindest mit den beiden inneren Enden 14, 15 oder Endabschnitten der Wellenteile 12 und 13 der Welle 6 in Fig. 1 fest verbunden.

Dazu ist die Hülse 16 beispielsweise auf das jeweilige innere Ende 14, 15 oder inneren Endabschnitt des ersten und zweiten Wellenteils 12 und 13 aufgepresst oder mittels thermischen Schrumpfens daran befestigt. Die Erfindung ist jedoch auf die genannten Beispiele zum Befestigen der Hülse 16 an den Wellenteilen 12 und 13 nicht beschränkt. Es kann jede Form der Befestigung vorgesehen werden, welche geeignet ist die Hülse 16 an dem jeweiligen Wellenteil 12 bzw. 13 zu befestigen.

Außen um die Hülse 16 ist der Stator 2 mit seinen Statorwicklungen 3 angeordnet.

Wahlweise zusätzlich kann, wie in dem Ausführungsbeispiel in Fig. 1 mit einer gepunkteten Linie angedeutet ist, ein elastisches Ausgleichselement 17 zwischen der Innenseite der Hülse 16 und der Außenseite der Magnetelemente 5 vorgesehen sein. Das elastische Ausgleichselement 17 ist beispielsweise wenigstens eine elastische Ausgleichs- oder Verbindungsschicht. Das Material des Ausgleichselements 17 bzw. der in Fig. 1 gezeigten Ausgleichs- oder Verbindungsschicht ist vorzugsweise elektrisch nicht leitend. Als Material für das Ausgleichselement kann beispielsweise ein Harz verwendet werden, wobei das Harz vorzugsweise in ausgehärtetem Zustand zumindest teilweise elastisch ist. Die Erfindung ist jedoch auf ein Harz als Material für das Ausgleichselement 17 nicht beschränkt. Es kann jedes andere Material oder jede andere Materialkombination vorgesehen werden, die geeignet ist die Magnetelemente 5 und die Hülse 16 der elektrischen Maschine 1 zu verbinden.

Die Ausgleichs- oder Verbindungsschicht weist elastische und dämpfende Eigenschaften auf. Des Weiteren sorgt die Ausgleichs- oder Verbindungsschicht als eine mechanische Ausgleichs- oder Verbindungsschicht für einen gleichmäßigen Kräfteausgleich bzw. für eine gleichmäßige Verteilung der Vorspannkraft der Hülse 16 auf die Magnetelemente 5 in radialer Richtung, um die durch die Magnetelemente 5 erzeugten Fliehkräfte beim Drehen der Welle 6 abzufangen. Die Ausgleichs- oder Verbindungsschicht kann bei der Montage beispielsweise in einem halbflüssigen Zustand auf der Innenseite der Hülse 16 und/oder der Außenseite der Magnetelemente 5 aufgebracht und z.B. nach einem Aufpressen der Hülse 16 thermisch behandelt werden, um auszuhärten. Die Wiedererweichungstemperatur des Materials der Ausgleichs- oder Verbindungsschicht ist dabei ausreichend hoch und insbesondere ausreichend höher als die maximale Betriebstemperatur der Magnetelemente 5 und der Hülse 16, so dass die Ausgleichs- oder Verbindungsschicht im Betrieb der elektrischen Maschine 1 nicht ungewollt weich wird. Das Vorsehen der Ausgleichs- oder Verbindungsschicht hat den Vorteil, dass sie auch einen Toleranzausgleich zwischen den hochtolerierten metallischen Elementen, hier insbesondere den Wellenteilen 12 und 13 und der Hülse 16, sowie den Magnetelementen 5 erlaubt, bei deren Fertigung entweder keine genauen Toleranzen möglich sind oder die Nachfolgeprozesse, wie z.B. Schleifen usw., sehr teuer oder unter Umständen sogar gesundheitsschädlich sind. Dies kann beispielsweise bei Magnetelementen 5 der Fall sein, welche auf Neodymium - Seltene-Erden basieren. Die Fliehkräfte der Magnetelemente 5 können durch das Ausgleichselement 17, z.B. die in Fig. 1 gezeigte Ausgleichs- oder Verbindungsschicht, in einem breiten Betriebsbereich der Drehzahl und der Temperatur neutralisiert bzw. geeignet kompensiert werden.

Des Weiteren ist wahlweise zusätzlich eine Trägerplatte 18 zwischen dem jeweiligen inneren Enden 14, 15 des Wellenteils 12 bzw. 13 und den gegenüberliegenden Enden der Magnetelemente 5 vorgesehen. Die Trägerplatten 18 werden dabei auf die Verbindungsstange 20 aufgeschoben. Die Trägerplatten 18 an beiden Enden der Magnetelemente 5 dienen dabei als axiale Aufnahmen für die Magnetelemente 5.

Wie in Fig. 1 dargestellt ist, sind außerdem Spannelemente 19 vorgesehen zum Verspannen der Wellenteile 12 und 13 und der dazwischen angeordneten Magnetelemente 5 und der Trägerplatte 18 miteinander in axialer Richtung. Die Spannelemente 19 sind dabei in dem in Fig. 1 gezeigten Ausführungsbeispiel z.B. an den beiden äußeren Enden der Laufräder 8, 9 auf der Verbindungsstange 20 angeordnet und einstellbar, um eine geeignete Vorspannung einzustellen. Als Spannelemente können beispielsweise Spannscheiben oder jede anderen geeigneten Spannelemente vorgesehen werden.

Die axialen Trägerplatten 18 sind an den Enden der Magnetelemente 5 derart angeordnet, dass durch die auf der Verbindungsstange 20 vorgesehenen Spannelemente 19 eine entsprechend in axialer Richtung generierte und geleitete mechanische Vorspannung bereitgestellt werden kann, welche die Aufnahme und radiale Positionierung der Magnetelemente 5 gewährleistet. In dem in Fig. 1 gezeigten Ausführungsbeispiel weist die Magnetanordnung in der Hülse eine segmentierte Bauweise auf, bei welcher beispielsweise wenigstens zwei Magnetelemente 5, z.B. in Form von Magnetstäben, radial um einen Außenumfangsabschnitt der Verbindungsstange 20 angeordnet werden.

Dem entsprechend weist die Hülse an ihrem Innenumfang eine beispielsweise umlaufenden Nut 32 auf zur Aufnahme der Magnetelemente 5 auf.

Die in erster Linie für die Halterung und Positionierung der Magnetelemente 5 konzipierten axialen Trägerplatten 18 können des Weiteren die folgende zusätzliche Funktion haben. Im Falle, dass die Trägerplatten 18 aus einem Material mit entsprechend ausgewählten magnetischen Eigenschaften ausgebildet werden, können sie zusätzlich einen Teil des Streuflusses an beiden Rändern der Magnetelemente 5 abfangen. Dadurch gelangen die schnell rotierenden magnetischen Felder nicht in die nahe gelegenen stationären Konstruktionselemente der elektrischen Maschine 1. Hierdurch werden Zusatzverluste und die Erwärmung der elektrischen Maschine 1 reduziert. Die Trägerplatten 18 können dazu beispielsweise aus einem nicht magnetischen Material oder Materialkombination hergestellt werden, wie z.B.

aus Stahl oder aus einem anderen nicht magnetischen Metall oder nicht magnetischen Metalllegierung.

Die Welle 6 ist mittels Radiallagern 24 gelagert, welche auf jeweils einem der Wellenteile 12, 13 angeordnet sind.

Des Weiteren ist erfindungsgemäß am ersten Wellenteil 12 ein Axiallager 25 vorgesehen. In Fig. 1 ist dabei die Rotationsscheibe des Axiallagers 25 dargestellt. Das Axiallager 25 ist beispielsweise ein herkömmliches Gaslager, z.B. ein dynamisches Gaslager. Die Erfindung ist jedoch nicht auf ein herkömmliches Gaslager als Axiallager beschränkt. Grundsätzlich kann jedes Axiallager eingesetzt werden, welches zur Lagerung des Wellenteils der elektrischen Maschine 1 geeignet ist.

Durch das Axiallager 25 in Form vorzugsweise eines Gaslagers ist ein erster Luftspalt 26 zwischen dem ersten Laufrad 8 und dem ersten Gehäuse 10 bzw. der Volute aufgrund der hohen Genauigkeit des Gaslagers relativ gut eingestellt und kann konstant gehalten werden. Der erste Luftspalt 26 ist durch das Axiallager 25 hierbei nur wenig von einer Temperaturentwicklung im Betrieb der elektrischen Maschine 1 betroffen.

Auf der anderen Seite der Welle 6 wäre es jedoch sehr schwer den für die Funktion des Kompressors bzw. Verdichters, seine Stabilität und seinen Wirkungsgrad wichtigen zweiten Luftspalt 27 zu beherrschen, d.h. konstant zu halten. Der zweite Luftspalt 27 ist dabei ebenfalls der Luftspalt zwischen dem zweiten Laufrad 9 und dem zweiten Gehäuse 11 bzw. Volute.

Die relative Position zwischen den Laufrädern 8, 9 und ihren zugeordneten Gehäusen bzw. Voluten 10 bzw. 11 könnte sich mit der Temperaturentwicklung des Rotors 4 und Stators 2 der elektrischen Maschine 1 wesentlich verändern. Das könnte die Performance oder Leistungsfähigkeit des Kompressors bzw. Verdichters reduzieren oder sogar zu seinem Ausfall führen.

Durch die Erfindung kann diese Gefahr jedoch wesentlich reduziert werden. Gemäß der Erfindung erfolgt eine thermische Kompensation der Ausdehnung der Wellenteile 12, 13 des Kompressors bzw. Verdichters. Damit können solche Kompressoren bzw. Verdichter in einem viel breiteren Temperaturbereich arbeiten.

Gemäß der Erfindung sind beide Laufräder 8, 9 fest mit der Verbindungsstange 20 verbunden und ihre Position ist durch die Verbindungsstange 20 und ein Federelement 28 gesichert. Das Federelement 28 als Teil einer thermischen Kompensationseinrichtung wird im Folgenden noch näher beschrieben.

Die Verbindungsstange 20 kann beispielsweise aus einem Kohlefasermaterial hergestellt sein. Die Erfindung ist jedoch nicht auf Kohlefasermaterial oder ein anderes Fasermaterial für die Verbindungsstange 20 beschränkt. Es kann jedes Material eingesetzt werden, welches für die Verbindungsstange 20 geeignet ist.

Die Passung zwischen der Verbindungsstange 20 und den Wellenteilen 12, 13 kann derart gewählt werden, dass eine relative Verschiebung zwischen der Verbindungsstange 20 und den Wellenteilen 12, 13 oder ein Schiebesitz der Wellenteile 12, 13 auf der Verbindungsstange 20 vorzugsweise im gesamten Temperaturbereich oder Betriebstemperaturbereich möglich ist. Dadurch kann der zweite Luftspalt 27 zwischen dem zweiten Laufrad 9 und dem zweiten Gehäuse bzw. der Volute 11 konstant gehalten werden, auch in dem Fall, wenn sich die Elemente, wie die beide Wellenteile 12 und 13, die Magnetelemente 5 und die axialen Trägerplatten 18 relativ stark ausdehnen.

Die ist möglich mittels eines vorgespannten, ringförmigen elastischen Kompensationselements 29. Dieses bildet zusammen mit dem Federelement 28 die thermische Kompensationseinrichtung 30.

Die Verbindungsstange 20 ist erfindungsgemäß aus einem Material mit einer guten oder möglichst großen mechanischen Stabilität und Festigkeit hergestellt und weist einen möglichst niedrigen thermischen Ausdehnungskoeffizienten auf. Wie zuvor beschrieben kann die Verbindungsstange 20 beispielsweise aus einem Kohlfasermaterial oder einem anderen geeigneten Faserverbundwerkstoff hergestellt sein oder dieses zumindest aufweisen. Die Erfindung ist aber nicht auf einen Faserverbundwerkstoff oder Kohlefasermaterial für die Herstellung der Verbindungstange 20 beschränkt. Es kann jedes andere Material oder Materialkombination für die Verbindungsstange 20 eingesetzt werden, einschließlich ein geeignetes Metall oder eine geeignete Metalllegierung, welche sich bei Wärme möglichst wenig ausdehnt und eine möglichst große mechanische Festigkeit und Stabilität aufweist.

Das vorgespannte, elastische Kompensationselement 29 weist eine Steifigkeit auf, die derart ausgewählt ist, dass das Kompensationselement 29 die Ausdehnungs-Differenzen zwischen der Verbindungsstange 20 und den restlichen Elementen des Rotors 4, d.h. den Wellenteilen 12, und 13, den axialen Trägerplatten 18, der Hülse 16, den Magnetelementen 5, dem Federelement 28, den Befestigungs- bzw. Spannelementen 19, den beiden Laufräder 8, 9, geeignet ausgleichen kann.

Alternativ kann das Kompensationselement 29 auch aus einem Material mit einem negativen thermischen Ausdehnungskoeffizienten hergestellt sein, welcher mit dem Rest der Konstruktion des Rotors 4 und der elektrischen Maschine 1 abgestimmt ist. Dadurch wird eine temperaturbedingte Ausdehnung des Rotors 4 minimiert oder ganz kompensiert. Der Bezugspunkt der temperaturbedingten Ausdehnung ist dabei der erste Luftspalt 26 des Axiallagers 25 an dem ersten Wellenteil 12 auf der rechten Seite in Fig. 1.

Wie in Fig. 1 gezeigt ist, ist zwischen dem äußeren Ende 13 des anderen Wellenteils, hier dem zweiten Wellenteils 13 in Fig. 1, und dem gegenüberliegenden Laufrad 9 das zusätzliche elastische Kompensationselement 29 vorgesehen.

Des Weiteren ist das Federelement 28 auf der Verbindungstange 20 angeordnet. Das Federelement 28 ist dabei in einer Aussparung 31 in dem äußeren Ende 23 des zweiten Wellenteils 13 in Fig. 1 zwischen dem zweiten Laufrad 9 und dem zweiten Wellenteil 13 angeordnet. Als Federelement 28 kann beispielsweise ein Metallring mit einem Außengewinde und/oder Innengewinde vorgesehen werden, zum Schrauben des Metallrings mit seinem Außengewinde in ein Innengewinde in der Aussparung des Wellenteils bzw. zum Schrauben des Metallrings mit seinem Innengewinde auf ein Außengewinde der Verbindungsstange 20. Ebenso kann als Federelement 28 wenigstens eine Federscheibe, z.B. eine gewellte Federscheibe, und/oder wenigstens ein Spannring usw. verwendet werden. Die Erfindung ist jedoch auf die genannten Beispiele für das Federelement 28 nicht beschränkt. Es kann jedes Federelement verwendet werden, welches wenigstens eine axiale Federung des Wellenteils und/oder des zugeordneten Laufrads erlaubt und für die elektrische Maschine 1 geeignet ist.

In dem in Fig. 1 gezeigten Ausführungsbeispiel ist das Kompensationselement 29 ringförmig um das Federelement 28 zwischen dem äußeren Ende 23 des zweiten Wellenteils 13 und dem Laufrad 9 angeordnet.

Die Übertragung des Drehmoments oder Motordrehmoments von dem Motor der elektrischen Maschine 1 auf die Laufräder 8, 9 geschieht zum größten Teil über das Kompensationselement 29. Die Übertragungskraft zum Übertragen des Drehmoments des Motors auf die Laufräder 8, 9 mittels des Kompensationselements 29 kann beispielsweise in einem ersten Fall durch Reibung zwischen dem Kompensationselement 29 und dem Wellenteil 13 auf der einen Seite und dem Kompensationselement 29 und dem Laufrad 9 auf der anderen Seite realisiert werden oder in einem zweiten Fall durch einen drehzahlabhängigen Formschluss (Mitnehmer) zwischen dem Kompensationselement 29 und dem Wellenteil 13 auf der einen Seite und dem Kompensationselement 29 und dem Laufrad 9 auf der anderen Seite realisiert werden. In dem ersten Fall muss die Vorspannung oder Anpresskraft des Kompensationselements 29 auf das Wellenteil 13 und das Laufrad 9 derart gewählt sein, dass bei jeder Betriebsbedingung und damit bei jeder damit verbundenen Temperatur, das Drehmoment, welches sich aus der Anpresskraft des Kompensationselements 29 gegen das Laufrad 9 und gegen das Wellenteil 13 und der damit verbundenen Reibung ergibt, größer ist als das zu übertragende Motordrehmoment. Zu dem zu übertragenden Motordrehmoment gehören auch dynamische Motordrehmomente, wie beispielsweise eine Motordrehmomentbeschleunigung oder Beschleunigung des Antriebes.

Die Genauigkeit der thermischen Kompensation kann dadurch erhöht werden, dass die zu erwartende Temperatur der Elemente des Stators 2 oder die Stator-Komponenten, d.h. der Stator 2 mit seinen Wicklungen 3, einschließlich dem zweiten Gehäuse 11 bzw. Volute, welche den zweiten Luftspalt 27 mit dem Laufrad 9 bildet, berücksichtigt wird bei der Auswahl des Materials der Verbindungsstange 20. Dabei werden insbesondere die thermischen Ausdehnungskoeffizienten der Elemente des Stators 2 sowie des zweiten Gehäuses 11 bei der Auswahl des Materials und des damit verbundenen thermischen Ausdehnungskoeffizienten der Verbindungsstange 20 berücksichtigt.

Die schnelllaufende Maschine, z.B. Synchronmaschine, wie sie zuvor mit Bezug auf Fig. 1 beispielhaft beschrieben wurde, weist den Rotor 4 oder sogenannten Mittel-Rotor zwischen der zweiteiligen Welle 6 mit den zwei Wellenteilen 12 und 13 auf. Die beiden Wellenteile 12 und 13 sind durch die folgenden Mittel zu einer sehr stabilen Rotorkonstruktion verbunden. Eines der Mittel ist dabei die Hülse 16, welche auf die beiden Wellenteile 12, 13 z.B. aufgepresst sein kann. Ein weiteres Mittel sind die vorgespannte Verbindungsstange 20 und die axialen Trägerplatten 18, die die Magnetelemente 5, insbesondere Permanentmagnete, in axialer Richtung aufnehmen und in axialer Richtung vorspannen. Ein besonderes Mittel ist das Kompensationselement 29.

Die Konstruktion der elektrischen Maschine 1 hat den Vorteil, dass die strukturelle Festigkeit und Steifigkeit bei einer möglichst maximalen aktiven Masse der Magnetelemente 5 vergrößert und damit eine maximal erreichbare Energiedichte der Maschine 1 erzielt werden kann. Eine thermische Kompensation der axialen Ausdehnung des Rotors 4 kann erreicht werden, vor allem des axialen Spiels zwischen dem Gehäuse 10, 11 bzw. der Volute und dem Laufrad 8, 9 bzw. dem Impeller, auf der dem Axiallager 25 gegenüberliegenden Motorseite der Maschine 1. Des Weiteren kann die Masse und die Trägheit der rotierenden Elemente durch die Reduktion der Masse an passiven Konstruktionselementen minimiert werden. Weiter kann die Steifigkeit durch die Einstellung der Zugkraft an der Verbindungsstange 20 eingestellt werden. Die Verbindungsstange 20 oder-stab arbeitet auf Zug. Dies hat einen großen Einfluss auf das Vergrößern der Steifigkeit bei einer nur sehr kleinen Zusatzmasse und einem vernachlässigbaren Zusatz-Trägheitsmoments des Rotors 4. Des Weiteren erfolgt keine wesentliche Reduzierung der aktiven Magnetmasse *Vm,* wobei für die Magnetmasse *Vm* gilt:

$$V_m = \frac{\pi}{4}(Dm^2 - Dst^2) \cdot Lm$$

Wobei *Dst<<Dm*
Vm: Magnetmasse
*Dst:* Durchmesser der Verbindungsstange
Dm: Magnetdurchmesser
*Lm*: Magnetlänge

Die Verbindungsstange 20 weist beispielsweise eine zylindrische Form auf oder zumindest einen zylindrischen Abschnitt mit dem Durchmesser *Dst.*

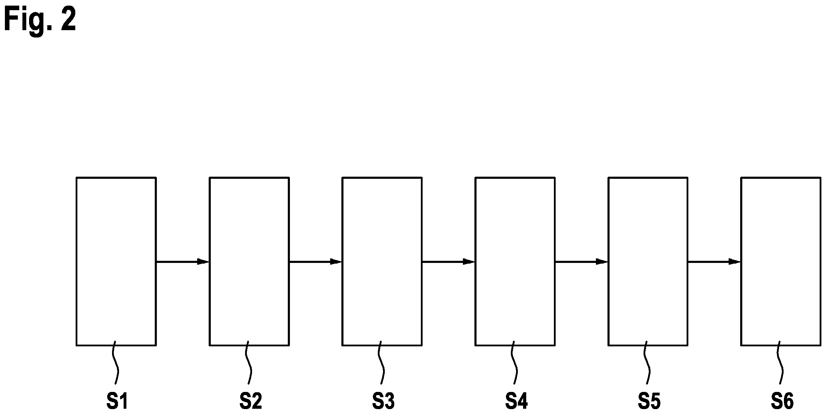

In Fig. 2 ist ein Flussdiagramm zur Herstellung der zuvor beispielhaft mit Bezug auf Fig. 1 beschriebenen erfindungsgemäßen elektrischen Maschine 1 und ihres Rotors dargestellt.

Zur Herstellung des Rotors wird in einem ersten Schritt S1 die Hülse zur Aufnahme des wenigstens einen Magnetelements bereitgestellt. Dabei kann die Hülse an ihrem Innenumfang oder das jeweilige Magnetelement an seinem Außenumfang optional mit dem Ausgleichselement versehen werden, bevor das Magnetelement anschließend in die Hülse eingeführt wird.

In einem nächsten Schritt S2 wird das wenigstens eine Magnetelement in die Hülse eingeführt, dabei kann optional die erste von zwei Trägerplatten zuvor in die Hülse eingeführt werden, bevor anschließend das wenigstens eine Magnetelement in die Hülse eingesetzt wird.

In einem weiteren Schritt S3 werden die Trägerplatten an den äußeren Enden der Magnetanordnung angeordnet. Sofern bereits eine der Trägerplatten bereits in der Hülse positioniert wurde, wird lediglich die zweite verbleibende Trägerplatte ebenfalls in der Hülse angeordnet.

Die Verbindungsstange kann dabei im Anschluss an den Schritt S2 in die durch das wenigstens eine Magnetelement gebildete Durchführung und, falls bereit eingesetzt, durch die Öffnung der Trägerplatten hindurchgeführt werden. Ebenso kann erst im Anschluss an den Schritt S3 in einem Schritt S3* die Verbindungsstange durch die Öffnung der Trägerplatten und die Durchführung des wenigstens einen Magnetelements hindurchgeführt werden.

In einem nächsten Schritt S4 werden die beiden Wellenteile mit ihren inneren Enden in den zugeordneten Enden der Hülse befestigt.

Im Falle einer segmentierten Bauweise, bei welcher beispielsweise wenigstens zwei Magnetelemente 5 z.B. in Form von Magnetstäben, radial um einen Außenumfangsabschnitt der Verbindungsstange 20 in Schritt S2 angeordnet werden, kann die Hülse an ihrem Innenumfang mit einer beispielsweise umlaufenden Nut ausgebildet sein, wie zuvor in Fig. 1 gezeigt ist. In diesem Fall werden zunächst die einzelnen Magnetstäbe in die Hülse eingeführt und in die Nut eingesetzt. Die Magnetelemente bilden dabei mit ihren Innenumfangsflächen eine Durchgangsöffnung, durch welche anschließend die Verbindungsstange hindurchgeführt werden kann. Dabei können die Nut auf ihrer Innenumfangsfläche und/oder die Magnetelemente auf ihrer Außenumfangsfläche wahlweise zusätzlich mit dem zuvor mit Bezug auf Fig. 1 beschriebenen Ausgleichselement versehen sein, beispielsweise wenigstens einer Verbindungs- oder Ausgleichsschicht aus einem Harz, welches nach dem Aushärten zumindest teilweise elastisch ist. Anschließend werden die Magnetelemente in die Nut in der Hülse eingesetzt und die Verbindungsstange durch die Durchgangsöffnung, welche von den Magnetelementen gebildet wird, hindurchgeschoben. Die Trägerplatten an den beiden Enden der Magnetelemente sind im Falle der Nut ebenfalls segmentiert ausgebildet um in die Nut an den beiden Enden der Magnetelemente eingesetzt zu werden, wie in dem Ausführungsbeispiel in Fig. 1 gezeigt ist. Es ist aber auch denkbar, dass die Trägerplatten in einer alternativen Ausführungsform nicht mit den Magnetelementen in die Nut eingesetzt werden sondern nur die Magnetelemente in der Nut aufgenommen werden. In diesem Fall können die Trägerplatten auch scheibenförmig ausgebildet sein und einen Außendurchmesser aufweisen, welcher an den Innendurchmesser der Hülse angepasst ist, so dass die Trägerplatten in die Hülse eingeschoben und an den beiden Enden der Magnetelemente außerhalb der Nut positioniert werden können.

Ebenso kann statt einer segmentierten Bauweise auch wenigstens ein hülsenförmiges oder scheibenförmiges Magnetelement vorgesehen werden. In diesem Fall ist zum Einschieben des Magnetelements in die Hülse in Schritt S2, die Hülse zumindest auf einer Einführungsseite mit einem Innendurchmesser ausgebildet, welcher an den Außendurchmesser des hülsenförmiges oder scheibenförmiges Magnetelements derart angepasst ist, dass das Magnetelement in die Hülse eingeschoben werden kann. Die Hülse kann dabei im Inneren mit einem Absatz ausgebildet sein, bis zu dem das Magnetelement einschiebbar ist. Dabei kann die Innenumfangsfläche im Bereich zumindest der Endposition des Magnetelements innerhalb der Hülse und/oder das Magnetelement auf seiner Außenumfangsfläche wahlweise zusätzlich mit dem zuvor mit Bezug auf Fig. 1 beschriebenen Ausgleichselement versehen sein, beispielsweise wenigstens einer Verbindungs- oder Ausgleichsschicht aus einem Harz, welches nach dem Aushärten zumindest teilweise elastisch ist. Die Trägerplatten, welche an den beiden Enden des wenigstens einen hülsenförmigen oder scheibenförmigen Magnetelements positioniert werden, können dabei scheibenförmig ausgebildet sein und in ihrem Außendurchmesser an den zugeordneten Innendurchmesser der Hülse angepasst sein zum Einschieben in die Hülse und Positionieren an dem jeweils zugeordneten Ende des Magnetelements. Grundsätzlich können auch mehrere hülsenförmige oder scheibenförmige Magnetelemente hintereinander in einer Reihe angeordnet werden. Die beiden Trägerplatten werden in diesem Fall an den beiden äußeren Enden der Magnetanordnung angeordnet.

Das Magnetelement, insbesondere das hülsenförmige oder scheibenförmige Magnetelement, kann radial oder diamaterial magnetisiert ausgebildet sein. Dies gilt für alle Ausführungsformen der Erfindung.

Das Aushärten des für das Ausgleichselement verwendete Harz kann beispielsweise je nach verwendetem Harz vor und/oder nach dem Positionieren des wenigstens einen Magnetelements in der Hülse erfolgen.

Zum Herstellen der elektrischen Maschine wird in einem Schritt S5 nach dem Verbinden der Wellenteile mit der Hülse das Federelement in der Aussparung des einen Wellenteils angeordnet und das Kompensationselement um das Federelement angeordnet. Anschließend werden in einem Schritt S6 die beiden Laufräder auf der Verbindungsstange angeordnet und schließlich die Laufräder und die zwischen den Laufrädern angeordneten Elemente durch die Spannelemente in einem Schritt S7 gegeneinander in axialer Richtung verspannt.

Die radiale und axiale Lagerung der Welle mittels wenigstens zwei Radiallagern und wenigstens einem Axiallager können in einem geeigneten der zuvor beschriebenen Schritte vorgesehen werden.

**Patentansprüche**

1. Elektrische Maschine (1) aufweisend:

eine zweigeteilte Welle (6) mit einem ersten und zweiten Wellenteil (12, 13), zwischen denen ein Rotor (4) mit wenigstens einem Magnetelement (5) angeordnet und mit den beiden Wellenteilen (12, 13) verbunden ist, wobei ein Axiallager (25) an dem ersten Wellenteil (12) vorgesehen ist, eine Verbindungsstange (20), auf welcher die beiden Wellenteile (12, 13) und der Rotor (4) angeordnet sind, ein erstes und zweites Laufrad (8, 9), wobei ein erster Luftspalt (26) zwischen dem ersten Laufrad (8) und einem ersten Gehäuse (10) ausgebildet ist, wobei ein zweiter Luftspalt (27) zwischen dem zweiten Laufrad (9) und einem zweiten Gehäuse (11) ausgebildet ist, **dadurch gekennzeichnet, dass** das erste und zweite Laufrad (8, 9) an den Enden der Verbindungsstange (20) dem jeweils zugeordneten ersten und zweiten Wellenteil (12, 13) gegenüberliegend angeordnet sind, dass eine thermische Kompensationseinrichtung (30) zwischen dem zweiten Wellenteil (13) und seinem zugeordneten Laufrad (9) vorgesehen ist zur Kompensation einer Ausdehnung der ersten und zweiten Wellenteile (12, 13) und des dazwischen angeordneten Rotors (6) in axialer Richtung, und dass die Verbindungsstange (20) aus einem Material oder einer Materialkombination hergestellt ist, welche einen möglichst geringen thermischen Ausdehnungskoeffizienten und eine möglichst hohe mechanische Festigkeit aufweist.

2. Elektrische Maschine nach Anspruch 1, **dadurch gekennzeichnet, dass** die thermische Kompensationseinrichtung (30) ein Federelement (28) und ein Kompensationselement (29) aufweist, wobei eine Steifigkeit des Kompensationselements (29) insbesondere derart gewählt ist, eine Ausdehnungs-Differenz zwischen der Verbindungsstange (20) und dem Rotor (4) in axialer Richtung zu kompensieren und wobei das Kompensationselement (29) vorzugsweise elastisch ist und wobei das Federelement (28) vorzugsweise in einer Aussparung (32) an dem äußeren Ende (23) des Wellenteils (13) aufnehmbar ist.

3. Elektrische Maschine nach Anspruch 1 oder 2, **da-**

**durch gekennzeichnet, dass** die Verbindungsstange (20) aus einem kohlefaser- und/oder glasfaserverstärktem Material oder Materialkombination hergestellt ist.

4. Elektrische Maschine nach einem der vorhergehenden Ansprüche, **dadurch gekennzeichnet, dass** die Welle (6) eine Radiallageranordnung mit vorzugsweise wenigstens zwei Radiallagern (24) und eine Axiallageranordnung mit wenigstens einem Axiallager (25) aufweist.

5. Elektrische Maschine nach Anspruch 4, **dadurch gekennzeichnet, dass** das wenigstens eine Axiallager (25) ein Gaslager und insbesondere ein dynamisches Gaslager ist.

6. Elektrische Maschine nach einem der vorhergehenden Ansprüche, **dadurch gekennzeichnet, dass** der Rotor (4) eine Hülse (16) aufweist, in welcher das wenigstens eine Magnetelement (5) aufgenommen ist und wobei die Hülse (16) jeweils mit einem inneren Ende (14, 15) des ersten und zweiten Wellenteils (12, 13) verbunden ist, vorzugsweise durch Aufschrumpfen oder Verpressen.

7. Elektrische Maschine nach Anspruch 6, **dadurch gekennzeichnet, dass** zwischen an der Innenumfangsfläche der Hülse (16) und/oder an der Außenumfangsfläche des wenigstens einen Magnetelements (5) ein zumindest teilweise elastisches Ausgleichselement (17) vorgesehen ist, wobei das Ausgleichselement (17) vorzugsweise eine Ausgleichsschicht ist, welche insbesondere aus einem Harz besteht, welches nach dem Aushärten zumindest teilweise elastisch ist.

8. Elektrische Maschine nach einem der Ansprüche 6 oder 7, **dadurch gekennzeichnet, dass** an einem oder beiden Enden des wenigstens einen Magnetelements (5) in der Hülse (16) jeweils eine Trägerplatte (18) vorgesehen ist, wobei die Trägerplatte (18) eine axiale Aufnahme für das wenigstens eine Magnetelement (5) bildet und wobei wenigstens eine Trägerplatte (18) aus einem nicht magnetischen Material oder einer nicht magnetischen Materialkombination hergestellt ist.

9. Elektrische Maschine nach einem der vorangehenden Ansprüche, **dadurch gekennzeichnet, dass** die beiden Laufräder (8, 9) durch Spannelemente (19) gegeneinander in axialer Richtung verspannt sind.

10. Elektrische Maschine nach einem der Ansprüche 2 bis 9, **dadurch gekennzeichnet, dass** das Federelement (28) wenigstens eine Federscheibe oder ein Scheibenelement mit einem Innengewinde und/oder Außengewinde ist.

11. Elektrische Maschine nach einem der Ansprüche 6 bis 10, **dadurch gekennzeichnet, dass** in der Hülse (16) wenigstens ein hülsenförmiges oder scheibenförmiges Magnetelement (5) aufgenommen ist, wobei das wenigstens eine hülsenförmige oder scheibenförmige Magnetelement (5) radial oder diamaterial magnetisiert ausgebildet ist, oder wobei die Hülse (16) an ihrem Innenumfang eine Nut (32) aufweist, in welche wenigstens ein Magnetelement (5) in Form eines Magnetstabs eingesetzt ist.

**Claims**

1. Electrical machine (1) having:
   a shaft (6) which is divided into two and has a first and a second shaft part (12, 13) between which a rotor (4) with at least one magnetic element (5) is arranged and is connected to the two shaft parts (12, 13), wherein an axial bearing (25) is provided on the first shaft part (12), a connecting rod (20) on which the two shaft parts (12, 13) and the rotor (4) are arranged, and a first and a second impeller (8, 9), wherein a first air gap (26) is formed between the first impeller (8) and a first housing (10), wherein a second air gap (27) is formed between the second impeller (9) and a second housing (11), **characterized in that** the first and the second impeller (8, 9) are arranged at the ends of the connecting rod (20) in a manner situated opposite the respectively associated first and second shaft parts (12, 13), **in that** a thermal compensation device (30) is provided between the second shaft part (13) and its associated impeller (9) for compensating for an expansion of the first and second shaft parts (12, 13) and of the rotor (6), which is arranged between them, in the axial direction, and **in that** the connecting rod (20) is produced from a material or a material combination which has as low a coefficient of thermal expansion as possible and as high a mechanical strength as possible.

2. Electrical machine according to Claim 1, **characterized in that** the thermal compensation device (30) has a spring element (28) and a compensation element (29), wherein a stiffness of the compensation element (29) is selected, in particular, in such a way as to compensate for a difference in expansion between the connecting rod (20) and the rotor (4) in the axial direction and wherein the compensation element (29) is preferably elastic and wherein the spring element (28) can preferably be received in a cutout (32) at the outer end (23) of the shaft part (13).

3. Electrical machine according to Claim 1 or 2, **characterized in that** the connecting rod (20) is produced from a carbon-fibre- and/or glass-fibre-reinforced material or material combination.

4. Electrical machine according to one of the preceding claims, **characterized in that** the shaft (6) has a radial bearing arrangement with preferably at least two radial bearings (24) and has an axial bearing arrangement with at least one axial bearing (25).

5. Electrical machine according to Claim 4, **characterized in that** the at least one axial bearing (25) is a gas bearing and in particular a dynamic gas bearing.

6. Electrical machine according to one of the preceding claims, **characterized in that** the rotor (4) has a sleeve (16) in which the at least one magnetic element (5) is received and wherein the sleeve (16) is connected to an inner end (14, 15) of each of the first and the second shaft part (12, 13), preferably by shrink-fitting or pressing in.

7. Electrical machine according to Claim 6, **characterized in that** an at least partially elastic compensation element (17) is provided between on the inner circumferential surface of the sleeve (16) and/or on the outer circumferential surface of the at least one magnetic element (5), wherein the compensation element (17) is preferably a compensation layer which consists, in particular, of a resin which is at least partially elastic after curing.

8. Electrical machine according to either of Claims 6 and 7, **characterized in that** a carrier plate (18) is respectively provided at one or both ends of the at least one magnetic element (5) in the sleeve (16), wherein the carrier plate (18) forms an axial receptacle for the at least one magnetic element (5) and wherein at least one carrier plate (18) is produced from a non-magnetic material or a non-magnetic material combination.

9. Electrical machine according to one of the preceding claims, **characterized in that** the two impellers (8, 9) are clamped against one another in the axial direction by clamping elements (19).

10. Electrical machine according to one of Claims 2 to 9, **characterized in that** the spring element (28) is at least one spring disc or one disc element with an internal thread and/or external thread.

11. Electrical machine according to one of Claims 6 to 10, **characterized in that** at least one sleeve-like or disc-like magnetic element (5) is received in the sleeve (16), wherein the at least one sleeve-like or disc-like magnetic element (5) is of radially or diametrically magnetized design, or wherein the sleeve (16) has, on its inner circumference, a groove (32) into which at least one magnetic element (5) in the form of a magnetic bar is inserted.

## Revendications

1. Machine électrique (1) comprenant :

   un arbre (6) en deux parties doté d'une première et d'une deuxième partie d'arbre (12, 13), entre lesquelles un rotor (4) doté d'au moins un élément magnétique (5) est disposé et est relié aux deux parties d'arbre (12, 13), un palier axial (25) étant prévu sur la première partie d'arbre (12), une tige de liaison (20) sur laquelle les deux parties d'arbre (12, 13) et le rotor (4) sont disposés, une première et une deuxième roue mobile (8, 9), un premier entrefer (26) étant réalisé entre la première roue mobile (8) et un premier boîtier (10), un deuxième entrefer (27) étant réalisé entre la deuxième roue mobile (9) et un deuxième boîtier (11), **caractérisée en ce que** la première et la deuxième roue mobile (8, 9) sont disposées aux extrémités de la tige de liaison (20) en regard de la première et de la deuxième partie d'arbre (12, 13) associée respectivement, **en ce qu'**un dispositif de compensation thermique (30) est prévu entre la deuxième partie d'arbre (13) et sa roue mobile (9) associée pour la compensation d'une dilatation des première et deuxième parties d'arbre (12, 13) et du rotor (6) disposé entre celles-ci dans la direction axiale, et **en ce que** la tige de liaison (20) est fabriquée à partir d'une matière ou d'une combinaison de matières, laquelle présente un coefficient de dilatation thermique aussi faible que possible et une résistance mécanique aussi grande que possible.

2. Machine électrique selon la revendication 1, **caractérisée en ce que** le dispositif de compensation thermique (30) comprend un élément ressort (28) et un élément de compensation (29), une rigidité de l'élément de compensation (29) étant en particulier sélectionnée pour compenser une différence de dilatation entre la tige de liaison (20) et le rotor (4) dans la direction axiale et l'élément de compensation (29) étant de préférence élastique et l'élément ressort (28) pouvant être logé de préférence dans un évidement (32) à l'extrémité extérieure (23) de la partie d'arbre (13).

3. Machine électrique selon la revendication 1 ou 2, **caractérisée en ce que** la tige de liaison (20) est fabriquée à partir d'une matière ou d'une combinaison de matières renforcée par des fibres de carbone et/ou des fibres de verre.

4. Machine électrique selon l'une des revendications précédentes, **caractérisée en ce que** l'arbre (6) comprend un ensemble de paliers radiaux doté de préférence d'au moins deux paliers radiaux (24) et un ensemble de paliers axiaux doté d'au moins un palier axial (25).

5. Machine électrique selon la revendication 4, **caractérisée en ce que** l'au moins un palier axial (25) est un palier à gaz et en particulier un palier à gaz dynamique.

6. Machine électrique selon l'une des revendications précédentes, **caractérisée en ce que** le rotor (4) comprend un manchon (16) dans lequel l'au moins un élément magnétique (5) est logé et le manchon (16) étant relié respectivement à une extrémité intérieure (14, 15) de la première et de la deuxième partie d'arbre (12, 13), de préférence par contraction ou pressage.

7. Machine électrique selon la revendication 6, **caractérisée en ce qu'**un élément d'égalisation (17) au moins partiellement élastique est prévu entre au niveau de la surface périphérique intérieure du manchon (16) et/ou au niveau de la surface périphérique extérieure de l'au moins un élément magnétique (5), l'élément d'égalisation (17) étant de préférence une couche d'égalisation, laquelle est constituée en particulier d'une résine, laquelle est au moins partiellement élastique après le durcissement.

8. Machine électrique selon l'une des revendications 6 ou 7, **caractérisée en ce qu'**une plaque de support (18) est prévue respectivement à l'une des extrémités ou aux deux extrémités de l'au moins un élément magnétique (5) dans le manchon (16), la plaque de support (18) formant un logement axial pour l'au moins un élément magnétique (5) et au moins une plaque de support (18) étant fabriquée à partir d'une matière non magnétique ou d'une combinaison de matières non magnétique.

9. Machine électrique selon l'une des revendications précédentes, **caractérisée en ce que** les deux roues mobiles (8, 9) sont calées l'une par rapport à l'autre dans la direction axiale au moyen d'éléments de serrage (19) .

10. Machine électrique selon l'une des revendications 2 à 9, **caractérisée en ce que** l'élément ressort (28) est au moins une rondelle ressort ou un élément formant rondelle doté d'un filetage intérieur et/ou d'un filetage extérieur.

11. Machine électrique selon l'une des revendications 6 à 10, **caractérisée en ce qu'**au moins un élément magnétique (5) en forme de manchon ou en forme de disque est logé dans le manchon (16), l'au moins un élément magnétique (5) en forme de manchon ou en forme de disque étant réalisé de manière magnétisée radialement ou diamétralement, ou le manchon (16) comprenant une rainure (32) au niveau de sa périphérie intérieure, rainure dans laquelle au moins un élément magnétique (5) sous la forme d'un barreau magnétique est inséré.

Fig. 1

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007072536 A1